# EUROPÄISCHE PATENTSCHRIFT

(11) **EP 4 328 393 B1**
(45) Veröffentlichungstag und Bekanntmachung des Hinweises auf die Patenterteilung: **06.11.2024**
(21) Anmeldenummer: 23172345.3
(22) Anmeldetag: 09.05.2023
(51) Int. Cl.: E04B 1/76, E04F 13/08, F16B 13/00, F16B 13/04, F16B 13/08, F16B 13/12, F16B 5/01, F16B 13/14

(54) **VORRICHTUNG ZUM BEFESTIGEN EINES GEGENSTANDS**
DEVICE FOR FASTENING AN OBJECT
DISPOSITIF DE FIXATION D'UN OBJET

(30) Priorität: 11.05.2022 DE 102022111852
(43) Veröffentlichungstag der Anmeldung: 28.02.2024
(73) Patentinhaber: drehfix Systems GmbH, 84307 Eggenfelden (DE)
(72) Erfinder: Rüdel, Werner, 84307 Eggenfelden (DE)
(74) Vertreter: Lichtnecker, Markus Christoph

(56) Entgegenhaltungen:
- EP-B1- 3 173 633
- DE-A1- 1 901 533
- DE-A1- 102012 102 550
- DE-A1- 4 438 408
- DE-U1- 202006 017 859
- DE-U1- 9 103 388

## Beschreibung

Die Erfindung betrifft eine Vorrichtung zum Befestigen eines Gegenstands an einem Objekt, vorzugsweise an einer Wand, aufweisend eine Befestigungsstange und einen Befestigungsdübel zum Befestigen der Befestigungsstange in einer im Objekt vorgesehenen Aussparung, z.B. einem Bohrloch.

Der Befestigungsdübel weist einen Befestigungskörper mit einem in axialer Richtung verlaufenden Hohlraum für die Befestigungsstange auf, wobei der Befestigungskörper in Radialrichtung aufweitbar ist.

Die Befestigungsstange weist wenigstens einen Abschnitt auf, bei dem der Querschnitt in einer ersten radialen Richtung breiter als in einer zweiten radialen Richtung ist.

Die Befestigungsstange ist derart im Befestigungskörper angeordnet, dass diese mit weniger als einer vollen Umdrehung zwischen einer Einführposition, in der der Befestigungskörper entspannt ist, in eine Klemmposition, in der der Befestigungskörper aufgeweitet ist, verstellbar ist.

Eine entsprechende Vorrichtung ist aus der EP 1 321 681 B1 grundsätzlich bekannt. Der Inhalt der EP 1 321 681 B1 wird - gerade auch im Hinblick auf die Ausführbarkeit sowie mögliche Varianten und Ausgestaltungen - in diese Anmeldung miteinbezogen.

Nachteilig daran ist, dass ein Monteur, beispielsweise bei der Montage einer Dämmplatte, nicht sieht, wenn die Klemmposition erreicht ist. So kann es vorkommen, dass der Monteur weiterdreht und die Befestigungsstange somit wieder ungewollt löst. Der Halt der Vorrichtung ist in diesem Fall nicht optimal.

Ferner ist nachteilig, dass der Befestigungskörper relativ starr ist und sich somit nicht optimal an eine Aussparung, z.B. ein Bohrloch, im Objekt anpasst. Der Halt der Vorrichtung ist in diesem Fall nicht optimal.

Zudem ist nachteilig, dass die Befestigungsstange gleichmäßig und/oder gerade ausgeformt ist und sich bei einer Belastung in Längsrichtung unter Umständen vom Befestigungsdübel bzw. von der Aussparung lösen kann.

DE 19 01 533 A1 und DE 20 2006 017859 U1 offenbaren Vorrichtungen gemäß dem Oberbegriff des Anspruchs 1.

DE 44 38 408 A1 offenbart ein dübelloses Befestigungselement.

Es ist eine Aufgabe der Erfindung, eine Vorrichtung zum Befestigen eines Gegenstands an einem Objekt sowie ein Verfahren zum Befestigen eines Gegenstands zu schaffen, bei der/m der Halt am Objekt verbessert wird.

Die Lösung dieser Aufgabe erfolgt durch die Gegenstände sowie das Verfahren der unabhängigen Ansprüche.

Erfindungsgemäß ist die Vorrichtung zum Befestigen eines Gegenstands, vorzugsweise eines Dämmmaterials, an einem Objekt, vorzugsweise an einer Wand, ausgebildet bzw. kann hierzu verwendet werden.

Bei dem Dämmmaterial kann es sich z.B. um einen Vollwärmeschutz handeln, welcher bei einer energetischen Sanierung eines Gebäudes verwendet wird. Beispielsweise kann das Dämmmaterial als Styropor- und/oder Faserdämmplatte ausgebildet sein.

Die Vorrichtung weist eine Befestigungsstange und einen Befestigungsdübel zum Befestigen der Befestigungsstange in einer im Objekt vorgesehenen Aussparung, z.B. einem Bohrloch, auf.

Die Befestigungsstange kann vorzugsweise einen Befestigungsstangenkopf aufweisen. Dieser kann mehreckig, z.B. dreieckig oder viereckig, vorzugsweise nicht-quadratisch oder quadratisch, oval oder kreissegmentförmig ausgebildet sein. Beispielsweise kann der Befestigungsstangenkopf eine Aussparung in Form eines Torx, Mehrkants, vorzugsweise Vierkants oder Sechskants, Schlitzes, Sternes und/oder Kreuzes für ein entsprechendes Werkzeug aufweisen.

Die Befestigungsstange und/oder der Befestigungsdübel können vorzugsweise ein Metallmaterial, z.B. Stahl, und/oder ein Kunststoffmaterial umfassen oder daraus bestehen. Beispielsweise kann die Befestigungsstange ein Metallmaterial aufweisen oder daraus bestehen, während der Befestigungsdübel ein Kunststoffmaterial aufweist oder daraus besteht.

Bei dem Kunststoffmaterial kann es sich z.B. um einen natürlichen und/oder biologischen Kunststoff handeln, was unter den Gesichtspunkten der Nachhaltigkeit vorteilhaft ist.

Der Befestigungsdübel weist einen Befestigungskörper mit einem in axialer Richtung verlaufenden Hohlraum für die Befestigungsstange auf.

Der radiale Querschnitt des Hohlraums kann konstant sein oder sich über die Länge, vorzugsweise gleichmäßig, konisch oder gestuft, ändern. Beispielsweise kann ein Außendurchmesser in einem vorderen Bereich 10 mm und in einem hinteren Bereich 14 mm betragen oder umgekehrt. Die Anpassung an die Aussparung, z.B. ein Bohrloch, im Objekt kann dadurch verbessert werden. Dies kann ferner das Dichtverhalten verbessern.

Die Befestigungsstange kann zumindest abschnittsweise in den Hohlraum eingeführt werden bzw. darin angeordnet sein.

Beispielsweise kann der Befestigungsdübel insgesamt länger als die Befestigungsstange sein. Die Befestigungsstange kann somit beispielsweise zumindest großteils im Befestigungsdübel aufgenommen werden.

Vorzugsweise sind die Befestigungsstange und der Befestigungsdübel werkseitig miteinander verbunden. So kann die Befestigungsstange bereits im Hohlraum des Befestigungskörpers platziert sein.

Der Befestigungskörper ist in Radialrichtung aufweitbar, wobei die Befestigungsstange wenigstens einen Abschnitt aufweist, bei dem der Querschnitt in einer ersten radialen Richtung breiter als in einer zweiten radialen Richtung ist.

Die Befestigungsstange kann vorzugsweise eine ovale, eckige, vorzugsweise rechteckige, und/oder abgeflachte Querschnittsfläche aufweisen. Bei einer eckigen Ausführungsform können die Ecken auch abgerundet sein.

Beispielsweise kann die Befestigungsstange als abgeflachte Schraube und/oder als abgeflachter Bolzen ausgebildet sein.

Vorzugsweise ist die Befestigungsstange an zwei sich gegenüberliegenden Seiten abgeflacht. Diese Seiten können zum Beispiel als ebene Flächen ausgebildet sein.

Beispielsweise kann die Befestigungsstange zumindest abschnittsweise eine reibungserhöhte Oberfläche und/oder eine gewisse Rauheit aufweisen. Die Befestigungsstange kann z.B. zumindest abschnittsweise eine Rillung und/oder ein Gewinde aufweisen. Das Gewinde kann schneckenförmig und/oder selbstziehend ausgebildet sein, sodass sich die Befestigungsstange bei einer Drehbewegung - vergleichbar mit einem Korkenzieher - quasi von selbst in den Befestigungskörper hinein zieht. Vorzugsweise kann das Gewinde steil ausgebildet sein. Beispielsweise kann die Steigung zwischen 3 mm und 7 mm, z.B. 5 mm, betragen. Durch die große Steigerung entstehen hohe Anpressdrücke gegen den Befestigungskörper und somit gegen die Aussparung.

Die reibungserhöhte Oberfläche, die Rauheit, die Rillung und/oder das Gewinde kann sich über die gesamte Oberfläche der Befestigungsstange erstrecken. Alternativ kann lediglich ein unterer Abschnitt der Befestigungsstange die reibungserhöhte Oberfläche, die Rauheit, die Rillung und/oder das Gewinde aufweisen. Ferner ist es möglich, dass lediglich die Abschnitte, bei denen der Querschnitt in einer ersten radialen Richtung schmäler als in einer zweiten radialen Richtung sind, die reibungserhöhte Oberfläche, die Rauheit, die Rillung und/oder das Gewinde aufweisen. Alternativ können auch lediglich die Abschnitte, bei denen der Querschnitt in einer ersten radialen Richtung breiter als in einer zweiten radialen Richtung sind, die reibungserhöhte Oberfläche, die Rauheit, die Rillung und/oder das Gewinde aufweisen.

Eine reibungserhöhte Oberfläche, eine Rauheit, Rillung und/oder ein Gewinde sind rein optional. So kann die Oberfläche der Befestigungsstange z.B. glatt sein.

Die Befestigungsstange ist derart im Befestigungskörper angeordnet, dass diese mit weniger als einer vollen Umdrehung zwischen einer Einführposition, in der der Befestigungskörper entspannt ist, in eine Klemmposition, in der der Befestigungskörper aufgeweitet ist, verstellbar ist.

Die Befestigungsstange wird vorzugsweise relativ zum Befestigungskörper verstellt. Bevorzugt ist der Befestigungskörper in der Klemmposition maximal aufgeweitet. Ein sicherer Halt in der Aussparung wird dadurch gewährleistet.

Die Umdrehung kann vorzugsweise weniger als 360°, 270°, 180°, 120° oder 100° betragen. Vorzugsweise beträgt die Umdrehung 90°.

Im Zuge der energetischen Sanierung von Bestandsgebäuden werden Dämmungen an den Außenwänden montiert. Die Befestigung erfolgt bisher - zusätzlich zu einem Verkleben - mittels herkömmlicher Dübel. Diese Montage gestaltet sich jedoch zeitaufwändig. Dadurch, dass erfindungsgemäß eine Drehung von weniger als einer vollen Umdrehung ausreicht, wird die Montagezeit erheblich reduziert. So kann sich der Befestigungsdübel beispielsweise bereits bei einer 90°-Drehung aufspreizen.

Die Montage kann manuell erfolgen. Beispielsweise ist der Einsatz eines Akkuschrauber und/oder eines Hammers nicht notwendig.

Im Gegensatz zu herkömmlichen Dübeln kann die erfindungsgemäße Vorrichtung vorzugsweise wiederverwendet werden. So kann durch eine Drehung in entgegengesetzte Richtung die Befestigungsstange bzw. der Befestigungskörper wieder aus der Klemmposition in die Einführposition zurück verstellt werden. Die Vorrichtung kann nun wieder aus der Aussparung entfernt und gegebenenfalls wiederverwendet werden. Dies ist unter den Gesichtspunkten der Nachhaltigkeit und/oder der Kostenersparnis vorteilhaft.

Erfindungsgemäß weist ein Dübelkopf des Befestigungsdübels eine Begrenzungsvorrichtung zum Begrenzen und/oder Anzeigen einer Drehung der Befestigungsstange bei Erreichen der Klemmposition auf.

Die Begrenzungsvorrichtung weist wenigstens oder genau einen Anschlag auf. Vorzugsweise können wenigstens oder genau zwei Anschläge vorgesehen sein.

Beispielsweise kann der Anschlag bzw. können die Anschläge in einer zentralen Aussparung des Befestigungsdübels, vorzugsweise des Dübelkopfes, angeordnet sein.

Die Form des Anschlags bzw. der Anschläge ist dabei grundsätzlich beliebig.

Die Begrenzungsvorrichtung kann beispielsweise als Lastaufnahme dienen.

Durch die Begrenzungsvorrichtung kann zudem sichergestellt werden, dass ein Monteur registriert, wenn die Klemmposition erreicht wird. Es kann dem Monteur angezeigt werden, beispielsweise indem er einen Widerstand spürt bzw. ein Einrasten hört.

Alternativ oder zusätzlich kann ein Weiterdrehen über die Klemmposition hinaus auch mechanisch durch die Begrenzungsvorrichtung verhindert werden.

Die Drehung der Befestigungsstange kann beispielsweise auf weniger als 360°, 270°, 180°, 120° oder 100° begrenzt werden. Vorzugsweise beträgt der maximale Bewegungsfreiraum bei einem dreieckigen Befestigungsstangenkopf 120° und bei einem viereckigen Befestigungsstangenkopf 90°.

Dadurch, dass ein Überdrehen über die Klemmposition verhindert wird, wird ein ungewolltes Lösen verhindert und ein optimaler Halt ermöglicht.

Nach einer Ausführungsform der Erfindung weist der Befestigungskörper im Inneren wenigstens oder genau eine in axialer Richtung verlaufende Nut auf.

Die Nut erstreckt sich vorzugsweise über die gesamte Länge des Befestigungskörpers.

Vorzugsweise sind mehrere Nuten vorgesehen, beispielsweise wenigstens oder genau zwei, drei, vier, fünf, sechs, sieben, acht, neun, zehn, elf oder zwölf.

Beispielsweise können wenigstens zwei Nuten an gegenüberliegenden Innenseiten des Befestigungskörpers vorgesehen sein. Vorzugsweise sind drei Nuten auf einer Seite und drei Nuten auf der gegenüberliegenden Seite vorgesehen.

Die Tiefe der Nuten kann vorzugsweise derart ausgebildet sein, dass die Nuten den Befestigungskörper nicht vollständig durchdringen. So wird lediglich das Material des Befestigungskörpers geschwächt. Der Befestigungskörper ist dadurch flexibel bzw. flexibler als ohne Nuten.

Durch diese Flexibilität passt sich der Befestigungskörper optimal an eine Aussparung, z.B. ein Bohrloch, im Objekt an und geht gewissermaßen eine Crimpverbindung ein. Der Halt der Vorrichtung ist daher optimal. Auch wird ein ungewolltes Verdrehen des Befestigungsdübels verhindert.

Gemäß einer weiteren Ausführungsform der Erfindung ist die Befestigungsstange zumindest abschnittsweise schlangenförmig ausgebildet.

Der Begriff schlangenförmig ist breit zu verstehen. So kann die Schlangenform beispielsweise rund oder eckig sein. Auch eine Zick-Zack-Form stellt daher z.B. eine Schlangenform im Sinne der Erfindung dar.

Vorzugsweise weist die Befestigungsstange in der Ebene des Abschnitts, bei dem der Querschnitt in einer ersten radialen Richtung breiter als in einer zweiten radialen Richtung ist, wenigstens einen seitlichen Versatz auf. Vorzugsweise sind mehrere Versatze vorgesehen.

Durch die Schlangenform wird eine optimale Anpassung an eine nicht immer exakt zylinderförmige Aussparung ermöglicht. Unebenheiten der Aussparung können dadurch auf einfache Weise ausgeglichen werden. Dies ermöglicht einen optimalen Halt in der Aussparung.

Nach einer weiteren Ausführungsform der Erfindung ist eine Verliersicherung vorgesehen, welche die Befestigungsstange sowohl in der Einführposition als auch in der Klemmposition am Befestigungsdübel, vorzugsweise am Befestigungskörper, sichert.

Die Verliersicherung kann grundsätzlich an einer beliebigen Stelle an der Befestigungsstange und/oder dem Befestigungsdübel bzw. dem Befestigungskörper vorgesehen sein. Beispielsweise kann die Befestigungsstange einen oder mehrere Vorsprünge und/oder Hinterschnitte aufweisen.

Die Befestigungsstange kann sich in der Einführposition sowie in der Klemmposition nicht ungewollt vom Befestigungsdübel lösen. Dies erleichtert einerseits die Montage. Andererseits wird verhindert, dass sich die Befestigungsstange von selbst löst. Ein selbstständiges Herausziehen der Befestigungsstange wird somit verhindert. Dies ermöglicht einen optimalen Halt in der Aussparung.

Weiterbildungen der Erfindung sind auch den abhängigen Ansprüchen, der Beschreibung sowie den beigefügten Zeichnungen zu entnehmen.

Gemäß einer Ausführungsform wird ein Teil der Verliersicherung durch einen Endbereich der Befestigungsstange gebildet, der einen Rasthals und einen Rastkopf aufweist.

Der Endbereich ist vorzugsweis von einem Befestigungsstangenkopf abgewandt.

Vorzugsweise steht der Endbereich sowohl in der Einführposition als auch in der Klemmposition über den Befestigungskörper vor.

Nach einer weiteren Ausführungsform weist der Rasthals einen kleineren radialen Querschnitt als der Rastkopf auf.

Der Rasthals kann z.B. als Verjüngung ausgebildet sein.

Beispielsweise kann der Rasthals einen kleineren radialen Querschnitt als die restliche Befestigungsstange aufweisen.

Vorzugsweise weist der Rastkopf denselben radialen Querschnitt wie die restliche Befestigungsstange auf.

Gemäß einer weiteren Ausführungsform wird ein weiterer Teil der Verliersicherung durch einen Endbereich des Befestigungskörpers gebildet, der wenigstens eine Rastnase zum Einrasten am Rasthals aufweist.

Der Endbereich ist vorzugsweise von einem Dübelkopf abgewandt.

Die Befestigungsstange kann bereits werkseitig mit dem Befestigungsdübel verrastet sein. So steht die Rastnase stets über den Endbereich des Befestigungskörpers vor.

Nach einer weiteren Ausführungsform weist der Befestigungskörper eine Verdrehsicherung auf, welche vorzugsweise wenigstens einen Klemmflügel aufweist, der sich in der Klemmposition aufspreizt.

Beispielsweise können mehrere, vorzugsweise gleichmäßig verteilte, Klemmflügel vorgesehen sein. Zum Beispiel können wenigstens zwei Klemmflügel zueinander um 90°, 120° oder 180° versetzt sein.

Die Verdrehsicherung spreizt sich auf, wenn die Befestigungsstange relativ zum Befestigungskörper verstellt wird.

In der Klemmposition ist die Verdrehsicherung vorzugsweise maximal aufgespreizt. Dies ermöglicht einen zusätzlichen Halt in der Aussparung, beispielsweise auch vor einem ungewollten Verdrehen.

Gemäß einer weiteren Ausführungsform weist der Befestigungsdübel einen Dübelkopf auf, welcher einen platten- und/oder tellerförmigen Endbereich aufweist.

Der Endbereich ist vorzugsweise von einer Verliersicherung abgewandt.

Vorzugsweise sind der Dübelkopf und der Befestigungskörper einstückig ausgebildet. Alternativ können der Dübelkopf und der Befestigungskörper auch teleskopierbar und/oder zweiteilig ausgebildet sein. Dies kann herstellungstechnisch günstiger sein, da beispielsweise Kosten für ein Werkzeug reduziert werden.

Der Dübelkopf und der Befestigungskörper können aus dem gleichen Material oder aus unterschiedlichen Materialien gefertigt sein.

Vorzugsweise kann für unterschiedlich lange Befestigungskörper derselbe Dübelkopf verwendet werden und umgekehrt. Der Dübelkopf und/oder der Befestigungskörper sind somit variabel, beispielsweise bei unterschiedlich dicken Dämmmaterialien, einsetzbar. Beispielsweise können der Dübelkopf und/oder der Befestigungskörper über eine Einhänge-, Klett-, Klammer-, Klemm-, Steck-, Rast-, Magnet-, Zapfen- und/oder Schraubvorrichtung miteinander verbunden werden.

Der platten- und/oder tellerförmige Endbereich liegt im montierten Zustand am Gegenstand, z.B. dem Dämmmaterial, an.

Nach einer weiteren Ausführungsform weist der Dübelkopf wenigstens einen, vorzugsweise mehrere, Stützkörper zum Stützen des Endbereichs des Dübelkopfes auf.

Der Stützkörper kann beispielsweise als Stützflügel ausgebildet sein.

Vorzugsweise fängt der Stützkörper auftretende Lasten ab und/oder verhindert ein ungewolltes Verdrehen des Befestigungsdübels. Zudem werden die Eigenschaften hinsichtlich der Statik und/oder der Stabilität erhöht. Beispielsweise bricht der Gegenstand, z.B. das Dämmmaterial, aufgrund des Stützkörpers nicht so leicht aus.

Ferner kann durch den Einsatz des Stützkörpers Material eingespart werden.

Vorzugsweise sind die Stützkörper scharfkantig und/oder klingenförmig ausgebildet. So können diese leicht in das Dämmmaterial eingebracht werden.

Gemäß einer weiteren Ausführungsform weist der Dübelkopf eine zentrale Aussparung zur Aufnahme eines Befestigungsstangenkopfes auf.

Die zentrale Aussparung bildet beispielsweise einen Zugang, vorzugsweise für ein Werkzeug, z.B. Schraubendreher, zur Befestigungsstange bzw. zum Befestigungsstangenkopf.

Der radiale Querschnitt der zentralen Aussparung ist vorzugsweise größer als der radiale Querschnitt des Hohlraums des Befestigungskörpers.

Beispielsweise kann der radiale Querschnitt der zentralen Aussparung zwischen 5 mm und 8 mm, z.B. 6 mm, betragen.

Der radiale Querschnitt des Hohlraums kann beispielsweise zwischen 2 mm und 5 mm, z.B. 3 mm oder 4 mm, betragen. Je kleiner der radiale Querschnitt des Hohlraums ist, desto höher ist der auftretenden Pressdruck.

Durch die unterschiedlichen radialen Querschnitte kann die Lage der Befestigungsstange bzw. des Befestigungsstangenkopfes festgelegt werden.

Vorzugsweise ist der maximale radiale Querschnitt des Befestigungsstangenkopfes kleiner als der radiale Querschnitt der zentralen Aussparung, jedoch größer als der radiale Querschnitt des Hohlraums des Befestigungskörpers. So kann der Befestigungsstangenkopf zwar in die zentrale Aussparung, jedoch nicht in den Hohlraum des Befestigungskörpers eingebracht werden.

Nach einer weiteren Ausführungsform weist der Endbereich des Dübelkopfes wenigstens eine dezentrale Aussparung auf.

Vorzugsweise sind mehrere, beispielsweise gleichmäßig verteilte, dezentrale Aussparungen vorgesehen.

Die Aussparung dient z.B. als Angriffsbereich für ein Klebemittel, z.B. PU-Schaum.

Bei der Montage eines Dämmmaterials wird eine, z.B. zylinderförmige, Tasche in das Dämmmaterial eingeformt. Ein tellerförmiger Endbereich des Dübelkopfes liegt im montierten Zustand am unteren Bereich der Tasche an. Die Tasche kann nun mit einem Stopfen, z.B. aus einem Dämmmaterial, beispielsweise Styropor und/oder Kork, verschlossen werden.

Die dezentrale Aussparung sorgt nun mit dem Klebemittel dafür, dass sich der Stopfen mit dem Dämmmaterial verklebt und/oder verbindet.

Optional kann der Dübelkopf an seinem Außenumfang eine Dichtung, z.B. einen Dichtring, aufweisen. Der Dichtring kann unabhängig von einer dezentralen Aussparung vorgesehen sein.

Die Erfindung betrifft auch ein Verfahren zum Befestigen eines Gegenstands, vorzugsweise eines Dämmmaterials, an einem Objekt, vorzugsweise an einer Wand, mit einer erfindungsgemäßen Vorrichtung.

Der Befestigungsdübel mit darin angeordneter und vorzugsweise gesicherter Befestigungsstange wird in die Aussparung des Objekts eingeführt.

Anschließend wird die Befestigungsstange mit weniger als einer vollen Umdrehung verstellt, wobei sich der Befestigungskörper aufweitet.

Alle hier beschriebenen Ausführungsformen und Bauteile der Vorrichtungen sind vorzugsweise dazu ausgebildet, nach dem hier beschriebenen Verfahren montiert zu werden. Ferner können alle hier beschriebenen Ausführungsformen der Vorrichtungen sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer ersten Ausführungsform einer Befestigungsstange einer erfindungsgemäßen Vorrichtung,
- Fig. 2: eine Draufsicht einer Ausführungsform eines Befestigungsstangenkopfes einer erfindungsgemäßen Vorrichtung,
- Fig. 3: eine Draufsicht einer weiteren Ausführungsform eines Befestigungsstangenkopfes einer erfindungsgemäßen Vorrichtung,
- Fig. 4: eine Perspektivansicht einer weiteren Ausführungsform einer Befestigungsstange einer erfindungsgemäßen Vorrichtung,
- Fig. 5: eine weitere Perspektivansicht der Befestigungsstange gemäß Fig. 4,
- Fig. 6: eine Draufsicht der Befestigungsstange gemäß Fig. 4,
- Fig. 7: eine Seitenansicht einer weiteren Ausführungsform einer Befestigungsstange einer erfindungsgemäßen Vorrichtung,
- Fig. 8: eine um 90° gedrehte Seitenansicht der Befestigungsstange gemäß Fig. 7,
- Fig. 9: eine Perspektivansicht der Befestigungsstange gemäß Fig. 7,
- Fig. 10: eine Seitenansicht einer Ausführungsform eines Befestigungsdübels einer erfindungsgemäßen Vorrichtung,
- Fig. 11: eine Schnittansicht des Befestigungsdübels gemäß Fig. 10,
- Fig. 12: eine weitere Schnittansicht des Befestigungsdübels gemäß Fig. 10,
- Fig. 13: eine Schnittansicht gemäß der Linie A-A des Befestigungsdübels gemäß Fig. 10,
- Fig. 14: eine Schnittansicht gemäß der Linie B-B des Befestigungsdübels gemäß Fig. 10,
- Fig. 15: eine Unteransicht des Befestigungsdübels gemäß Fig. 10,
- Fig. 16: eine Draufsicht des Befestigungsdübels gemäß Fig. 10,
- Fig. 17: eine Draufsicht des Befestigungsdübels gemäß Fig. 10 mit eingesetzter Befestigungsstange,
- Fig. 18: eine Seitenansicht des Befestigungsdübels gemäß Fig. 10 mit eingesetzter Befestigungsstange,
- Fig. 19: eine Schnittansicht des Befestigungsdübels gemäß Fig. 10 mit eingesetzter Befestigungsstange, und
- Fig. 20: eine teiltransparente Seitenansicht einer Ausführungsform einer erfindungsgemäßen Vorrichtung im montierten Zustand.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Vorzugsweise kann die Form der Bolzenstange und/oder des Bolzenstangenkopfes grundsätzlich beliebig sein. Auch sind die in axialer Richtung verlaufenden Nuten, die Begrenzungsvorrichtungen, Verliersicherungen, dezentralen Aussparungen und/oder Stützkörper optional bzw. kann deren Form und/oder Anzahl variieren.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

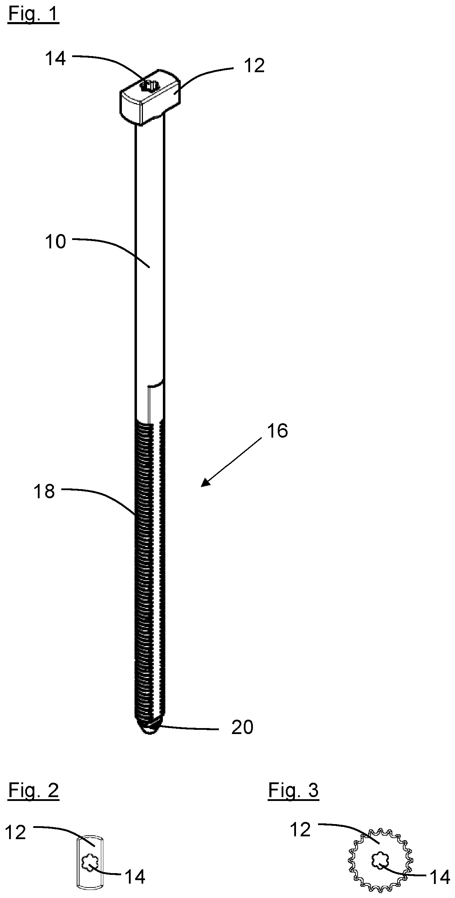

Fig. 1 zeigt eine Befestigungsstange 10 mit einem Befestigungsstangenkopf 12 mit einer Aussparung 14, z.B. für einen Torx.

Die Befestigungsstange 10 weist einen Abschnitt 16 auf, bei dem der Querschnitt in einer ersten radialen Richtung breiter als in einer zweiten radialen Richtung ist. Der Abschnitt 16 ist quasi auf zwei sich gegenüberliegenden Seiten abgeflacht. Optional kann auf der nicht abgeflachten Seite ein Gewinde 18 vorgesehen sein.

Beispielsweise kann leidglich eine untere Hälfte der Befestigungsstange 10 eine Abflachung aufweisen. Eine obere Hälfte kann hingegen einen gleichmäßigen Querschnitt aufweisen.

Vorzugsweise weist die Befestigungsstange 10 an ihrem unteren Endbereich eine Verliersicherung 20 auf.

Die Verliersicherung 20 verhindert beispielsweise, dass sich die Befestigungsstange 10 von selbst von einem Befestigungsdübel löst.

Wie in Fig. 2 dargestellt ist, kann der Befestigungsstangenkopf 12 beispielsweise rechteckförmig ausgebildet sein.

Alternativ kann der Befestigungsstangenkopf 12, wie in Fig. 3 dargestellt ist, beispielsweise sternförmig ausgebildet sein.

Beispielsweise können verschiedene Drehwinkel begrenzt bzw. angezeigt werden.

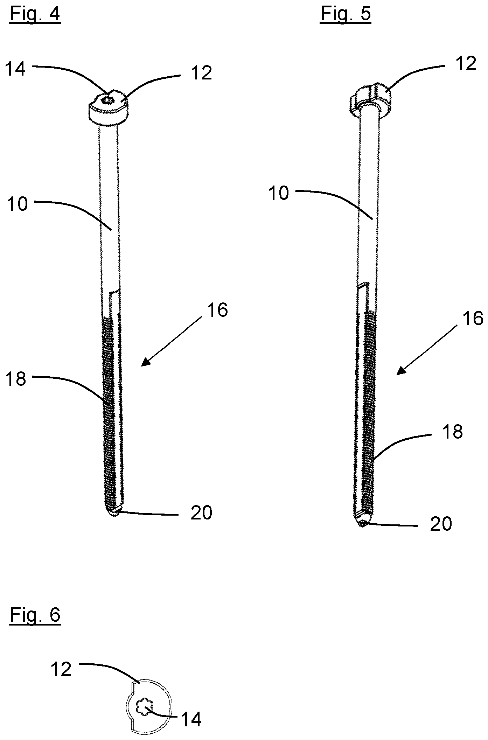

Ferner kann der Befestigungsstangenkopf 12, wie in den Fig. 4 bis 6 gezeigt ist, kreissegmentförmig ausgebildet sein.

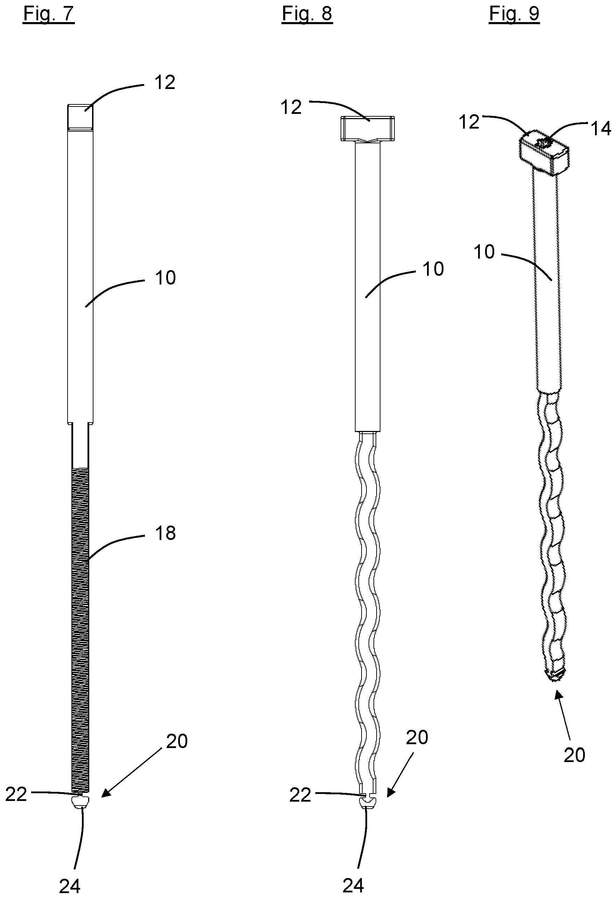

Gemäß Fig. 7 kann die Verliersicherung 20 einen Rasthals 22 und einen Rastkopf 24 aufweisen.

Wie in den Fig. 8 und 9 zu sehen ist, kann die Befestigungsstange 10 beispielsweise zumindest abschnittsweise schlangenförmig ausgebildet sein.

Die Schlangenform ermöglicht eine optimale Anpassung an eine nicht immer exakt zylinderförmige Aussparung, z.B. ein Bohrloch. Unebenheiten können dadurch auf einfache Weise ausgeglichen werden.

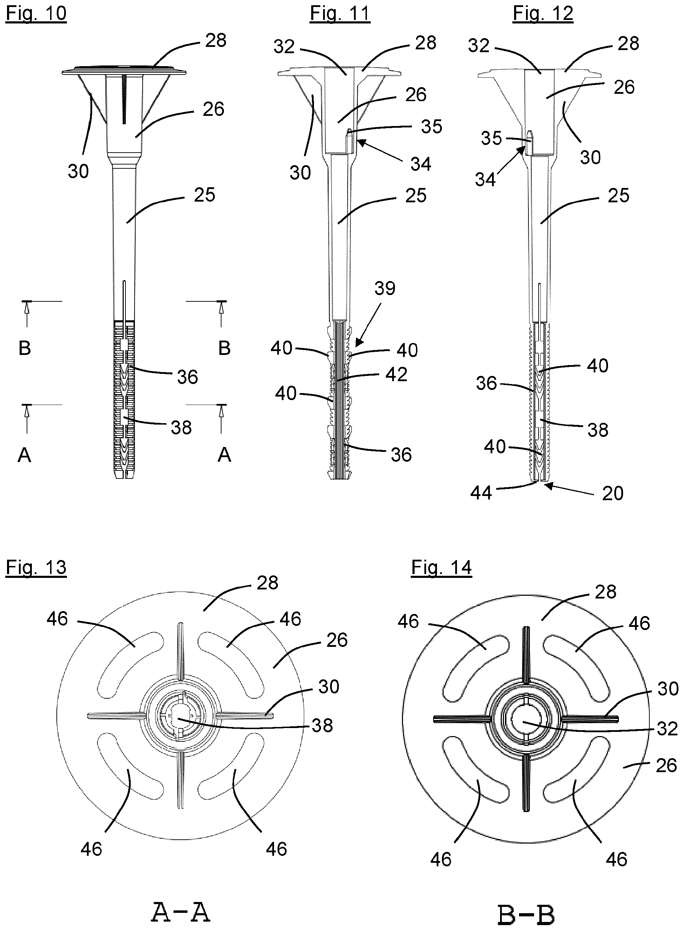

Fig. 10 zeigt einen Befestigungsdübel 25 mit einem Dübelkopf 26. Der Dübelkopf 26 weist einen tellerförmigen Endbereich 28 sowie mehrere, z.B. drei oder vier, Stützkörper 30, welche den Endbereich 28 des Dübelkopfes 26 stützen, auf.

Der Dübelkopf 26 weist eine zentrale Aussparung 32 auf. In dieser zentralen Aussparung 32 kann z.B. ein Befestigungsstangenkopf 12 eingebracht werden.

Wie in den Schnittansichten in Fig. 11 und 12 zu sehen ist, kann in der zentralen Aussparung 32 eine Begrenzungsvorrichtung 34 zum Begrenzen der Drehung der Befestigungsstange 10 vorgesehen sein.

Die Anzahl und/oder Form der Begrenzungsvorrichtung 34 kann an die Form des Befestigungsstangenkopfes 12 angepasst sein.

Die Begrenzungsvorrichtung 34 weist einen oder mehrere Anschläge 35 auf, die beispielsweise mit einem oder mehreren Gegenanschlägen des Befestigungsstangenkopfes 12 zusammenwirken.

Der Befestigungsdübel 25 weist einen Befestigungskörper 36 mit einem in axialer Richtung verlaufenden Hohlraum 38 für die Befestigungsstange 10 auf.

Der Befestigungskörper 36 kann eine Verdrehsicherung 39 mit Klemmflügeln 40 aufweisen.

Die Befestigungsstange 10 kann derart im Befestigungskörper 36 angeordnet sein, dass diese mit weniger als einer vollen Umdrehung zwischen einer Einführposition, in der der Befestigungskörper 36 entspannt ist, in eine Klemmposition, in der der Befestigungskörper 36 aufgeweitet ist, verstellbar ist.

Wie in Fig. 11 dargestellt ist, kann der Befestigungskörper 36 im Inneren optional mehrere in axialer Richtung verlaufende Nuten 42 aufweisen.

Der Befestigungskörper 36 ist dadurch flexibler als ohne die Nuten 42 und kann sich in der Klemmposition daher optimal an eine Aussparung, z.B. ein Bohrloch, im Objekt anpassen.

Wie in Fig. 12 zu sehen ist, kann ein Endbereich des Befestigungskörpers 36 einen weiteren Teil der Verliersicherung 20 bilden. Hierbei können Rastnasen 44 zum Einrasten am Rasthals 22 vorgesehen sein.

Die Rastnasen 44 können vorzugsweise flexible und/oder elastisch ausgebildet sein. So können sich diese zumindest vorübergehend öffnen, damit der Rastkopf 24 hindurchgeschoben werden kann. Anschließend können sich die Rastnasen 44 wieder in die Ausgangsposition zurückbewegen.

In Fig. 13 ist eine Schnittansicht gemäß der Linie A-A in Fig. 10 dargestellt.

Der tellerförmige Endbereich 28 des Dübelkopfes 26 weist z.B. vier dezentrale Aussparungen 46 auf.

Die dezentrale Aussparungen 46 sorgen mit einem Klebemittel dafür, dass sich ein Stopfen mit dem Dämmmaterial verkleben und/oder verbinden kann.

Fig. 14 zeigt eine Schnittansicht gemäß der Linie B-B in Fig. 10.

Im Vergleich mit Fig. 13 ist ersichtlich, dass der Durchmesser des Hohlraums 38 innerhalb des Befestigungskörpers 36 kleiner sein kann, als oberhalb.

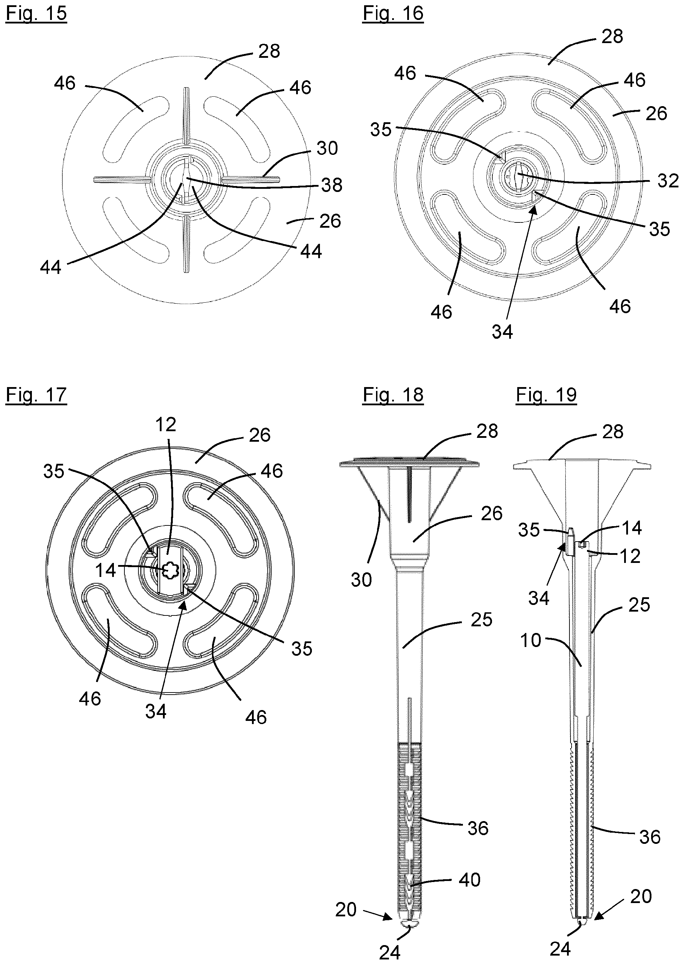

In der Unteransicht gemäß Fig. 15 sind die Rastnasen 44 der Verliersicherung 20 zu sehen.

Die Draufsicht in Fig. 16 zeigt zwei Anschläge 35 der Begrenzungsvorrichtung 34.

Diese können, wie in Fig. 17 zu sehen ist, mit dem Befestigungsstangenkopf 12 zusammenwirken.

Der Befestigungsstangenkopf 12 kann somit lediglich um 90° gedreht werden.

Durch die Drehung erfolgt eine Verstellung zwischen der Einführposition, in der der Befestigungskörper 36 entspannt ist, und der Klemmposition, in der der Befestigungskörper 36 aufgeweitet ist.

Wie in Fig. 18 dargestellt ist, wird die Befestigungsstange 10 durch die Verliersicherung 20 sowohl in der Einführposition als auch in der Klemmposition am Befestigungsdübel 25 bzw. am Befestigungskörper 36 gesichert.

Fig. 19 zeigt eine Schnittzeichnung. Die Befestigungsstange 10 ist im Befestigungsdübel 25 aufgenommen.

Die Befestigungsstange 10 ist über die Verliersicherung 20 am Befestigungsdübel 25 gesichert.

Aufgrund der Begrenzungsvorrichtung 34 kann die Befestigungsstange 10 lediglich um 90° verdreht werden. In dieser Klemmposition spreizt sich der Befestigungskörper 36 auf und sichert die Befestigungsstange 10 auf diese Weise beispielsweise in einem Bohrloch.

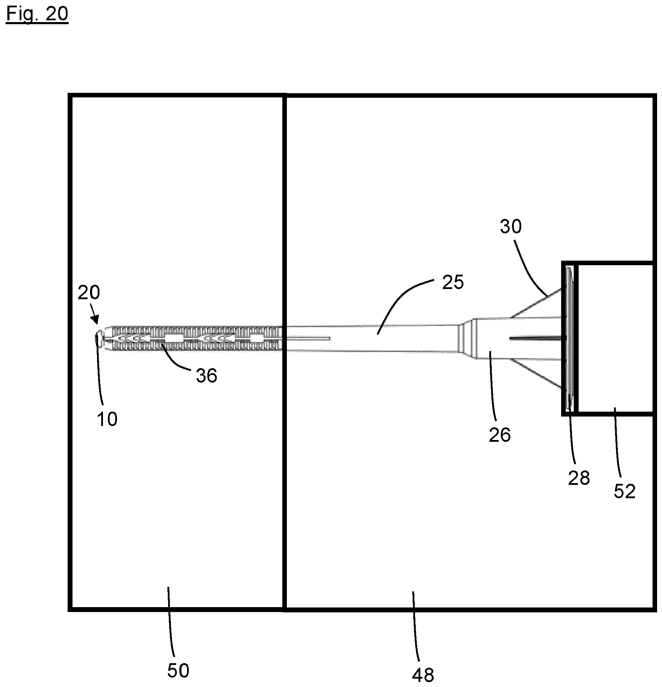

In Fig. 20 ist die Befestigungsvorrichtung im montierten Zustand dargestellt. Ein Gegenstand 48, z.B. ein Dämmmaterial, wird an einem Objekt 50, z.B. einer Wand, befestigt.

Bei der Montage eines Dämmmaterials 48 wird eine, z.B. zylinderförmige, Tasche in das Dämmmaterial 48 eingeformt. Der tellerförmige Endbereich 28 des Dübelkopfes 26 liegt im montierten Zustand am unteren Bereich der Tasche an. Die Tasche kann anschließend mit einem Stopfen 52, z.B. aus einem Dämmmaterial, verschlossen werden.

### Bezugszeichenliste

- 10: Befestigungsstange
- 12: Befestigungsstangenkopf
- 14: Aussparung
- 16: Abschnitt
- 18: Gewinde
- 20: Verliersicherung
- 22: Rasthals
- 24: Rastkopf
- 25: Befestigungsdübel
- 26: Dübelkopf
- 28: tellerförmiger Endbereich
- 30: Stützkörper
- 32: zentrale Aussparung
- 34: Begrenzungsvorrichtung
- 35: Anschlag
- 36: Befestigungskörper
- 38: Hohlraum
- 39: Verdrehsicherung
- 40: Klemmflügel
- 42: Nut
- 44: Rastnase
- 46: dezentrale Aussparung
- 48: Gegenstand, Dämmmaterial
- 50: Objekt, Wand
- 52: Stopfen

## Patentansprüche

1. Vorrichtung zum Befestigen eines Gegenstands (48), vorzugsweise eines Dämmmaterials, an einem Objekt (50), vorzugsweise an einer Wand, aufweisend
eine Befestigungsstange (10) und
einen Befestigungsdübel (25) zum Befestigen der Befestigungsstange (10) in einer im Objekt (50) vorgesehenen Aussparung, wobei
der Befestigungsdübel (25) einen Befestigungskörper (36) mit einem in axialer Richtung verlaufenden Hohlraum (38) für die Befestigungsstange (10) aufweist,
wobei der Befestigungskörper (36) in Radialrichtung aufweitbar ist, wobei
die Befestigungsstange (10) wenigstens einen Abschnitt (16) aufweist, bei dem der Querschnitt in einer ersten radialen Richtung breiter als in einer zweiten radialen Richtung ist, wobei
die Befestigungsstange (10) derart im Befestigungskörper (36) angeordnet ist,
dass diese mit weniger als einer vollen Umdrehung zwischen einer Einführposition, in der der Befestigungskörper (36) entspannt ist, in eine Klemmposition, in der der Befestigungskörper (36) aufgeweitet ist, verstellbar ist,
**dadurch gekennzeichnet, dass**
ein Dübelkopf (26) des Befestigungsdübels (25) eine Begrenzungsvorrichtung (34) zum Begrenzen und/oder Anzeigen einer Drehung der Befestigungsstange (10) bei Erreichen der Klemmposition aufweist, wobei
die Begrenzungsvorrichtung (34) wenigstens oder genau einen Anschlag (35) aufweist.

2. Vorrichtung nach Anspruch 1,
**dadurch gekennzeichnet, dass**
der Befestigungskörper (36) im Inneren wenigstens eine in axialer Richtung verlaufende Nut (42) aufweist.

3. Vorrichtung nach Anspruch 1 oder 2,
**dadurch gekennzeichnet, dass**
die Befestigungsstange (10) zumindest abschnittsweise schlangenförmig ausgebildet ist.

4. Vorrichtung nach einem der vorhergehenden Ansprüche,
**dadurch gekennzeichnet, dass**
eine Verliersicherung (20) vorgesehen ist, welche die Befestigungsstange (10) sowohl in der Einführposition als auch in der Klemmposition am Befestigungsdübel (25), vorzugsweise am Befestigungskörper (36), sichert.

5. Vorrichtung nach Anspruch 4,
**dadurch gekennzeichnet, dass**
ein Teil der Verliersicherung (20) durch einen Endbereich der Befestigungsstange (10) gebildet wird, der einen Rasthals (22) und einen Rastkopf (24) aufweist.

6. Vorrichtung nach einem der vorhergehenden Ansprüche,
**dadurch gekennzeichnet, dass**
der Befestigungsdübel (25) insgesamt länger als die Befestigungsstange (10) ist.

7. Vorrichtung nach einem der vorhergehenden Ansprüche,
**dadurch gekennzeichnet, dass**
ein Weiterdrehen über die Klemmposition hinaus mechanisch durch die Begrenzungsvorrichtung (34) verhindert wird.

8. Vorrichtung nach einem der vorhergehenden Ansprüche,
**dadurch gekennzeichnet, dass**
der Befestigungskörper (36) eine Verdrehsicherung (39) aufweist, welche vorzugsweise wenigstens einen Klemmflügel (40) aufweist, der sich in der Klemmposition aufspreizt.

9. Vorrichtung nach einem der vorhergehenden Ansprüche,
**dadurch gekennzeichnet, dass**
der Befestigungsdübel (25) einen Dübelkopf (26) aufweist, welcher einen tellerförmigen Endbereich (28) aufweist.

10. Vorrichtung nach einem der vorhergehenden Ansprüche,
**dadurch gekennzeichnet, dass**
der Dübelkopf (26) wenigstens einen, vorzugsweise mehrere, Stützkörper (30) zum Stützen des Endbereichs (28) des Dübelkopfes (26) aufweist.

11. Vorrichtung nach einem der vorhergehenden Ansprüche,
**dadurch gekennzeichnet, dass**
der Dübelkopf (26) eine zentrale Aussparung (32) zur Aufnahme eines Befestigungsstangenkopfes (12) aufweist.

12. Vorrichtung nach Anspruch 11,
**dadurch gekennzeichnet, dass**
der maximale radiale Querschnitt des Befestigungsstangenkopfes (12) kleiner ist als der radiale Querschnitt der zentralen Aussparung (32) und größer als der radiale Querschnitt des Hohlraums (38) des Befestigungskörpers (36).

13. Verfahren zum Befestigen eines Gegenstands (48), vorzugsweise eines Dämmmaterials, an einem Objekt (50), vorzugsweise an einer Wand, mit einer Vorrichtung nach einem der vorhergehenden Ansprüche, bei dem
der Befestigungsdübel (25) mit darin angeordneter Befestigungsstange (10) in die Aussparung des Objekts (50) eingeführt wird und
die Befestigungsstange (10) mit weniger als einer vollen Umdrehung verstellt wird, wobei sich der Befestigungskörper (36) aufweitet.

## Claims

1. Device for fixing an article (48), preferably an insulating material, to an object (50), preferably a wall, comprising a fixing rod (10) and
a fixing dowel (25) for fixing the fixing rod (10) in a recess provided in the object (50), wherein
the fixing dowel (25) has a fixing body (36) with a cavity (38) extending in the axial direction for the fixing rod (10), wherein the fixing body (36) can be widened in the radial direction, wherein the fixing rod (10) has at least one portion (16) in which the cross-section is wider in a first radial direction than in a second radial direction,
wherein
the fixing rod (10) is disposed in the fixing body (36) such that it can be adjusted with less than one full rotation between an insertion position, in which the fixing body (36) is relaxed, and a clamping position, in which the fixing body (36) is widened,
**characterized in that**
a dowel head (26) of the fixing dowel (25) has a limiting device (34) for limiting and/or indicating a rotation of the fixing rod (10) upon attainment of the clamping position, wherein
the limiting device (34) has at least or precisely one stop (35).

2. Device according to claim 1,
**characterized in that**
the fixing body (36) has on the inside at least one groove (42) running in the axial direction.

3. Device according to claim 1 or 2,
**characterized in that**
the fixing rod (10), or at least portions thereof, is serpentine in shape.

4. Device according to any of the preceding claims,
**characterized in that**
a securing means (20) is provided which secures the fixing rod (10), both in the insertion position and in the clamping position, to the fixing dowel (25), preferably to the fixing body (36).

5. Device according to claim 4,
**characterized in that**
part of the securing means (20) is formed by an end region of the fixing rod (10), said end region having a latching neck (22) and a latching head (24).

6. Device according to any of the preceding claims,
**characterized in that**
the fixing dowel (25) is longer overall than the fixing rod (10).

7. Device according to any of the preceding claims,
**characterized in that**
further rotation beyond the clamping position is mechanically prevented by the limiting device (34).

8. Device according to any of the preceding claims,
**characterized in that**
the fixing body (36) has a rotation-prevention device (39), which preferably has at least one clamping wing (40) that spreads out in the clamping position.

9. Device according to any of the preceding claims,
**characterized in that**
the fixing dowel (25) has a dowel head (26) which has a plate-shaped end region (28).

10. Device according to any of the preceding claims,
**characterized in that**
the dowel head (26) has at least one, preferably several, supporting bodies (30) for supporting the end region (28) of the dowel head (26).

11. Device according to any of the preceding claims,
**characterized in that**
the dowel head (26) has a central recess (32) for receiving a fixing rod head (12).

12. Device according to claim 11,
**characterized in that**
the maximum radial cross-section of the fixing rod head (12) is smaller than the radial cross-section of the central recess (32) and larger than the radial cross-section of the cavity (38) of the fixing body (36).

13. Method for fixing an article (48), preferably an insulating material, to an object (50), preferably a wall, with a device in accordance with any of the preceding claims, in which
the fixing dowel (25) with the fixing rod (10) disposed therein is inserted into the recess of the object (50), and
the fixing rod (10) is adjusted with less than one full rotation, whereby the fixing body (36) widens.

## Revendications

1. Dispositif de fixation d'un objet (48), de préférence d'un matériau isolant, à un élément (50), de préférence à un mur, comprenant
une tige de fixation (10) et
une cheville de fixation (25) pour fixer la tige de fixation (10) dans un évidement prévu dans l'élément (50),
dans lequel
la cheville de fixation (25) présente un corps de fixation (36) ayant une cavité (38), s'étendant dans la direction axiale, pour la tige de fixation (10), le corps de fixation (36) pouvant être évasé dans la direction radiale,
la tige de fixation (10) présente au moins une portion (16) dont la section transversale est plus large dans une première direction radiale que dans une deuxième direction radiale,
la tige de fixation (10) est disposée dans le corps de fixation (36) de manière à pouvoir être déplacée, avec moins d'un tour complet, entre une position d'insertion dans laquelle le corps de fixation (36) est détendu, et une position de serrage dans laquelle le corps de fixation (36) est évasé,
**caractérisé en ce que**
une tête de cheville (26) de la cheville de fixation (25) comprend un dispositif de limitation (34) pour limiter et/ou indiquer une rotation de la tige de fixation (10) lorsque la position de serrage est atteinte,
le dispositif de limitation (34) comprend au moins ou exactement une butée (35).

2. Dispositif selon la revendication 1,
**caractérisé en ce que**
le corps de fixation (36) présente à l'intérieur au moins une rainure (42) s'étendant dans la direction axiale.

3. Dispositif selon la revendication 1 ou 2,
**caractérisé en ce que**
la tige de fixation (10) est réalisée au moins localement en forme de serpentin.

4. Dispositif selon l'une des revendications précédentes,
**caractérisé en ce que**
il est prévu un blocage anti-perte (20) qui bloque la tige de fixation (10) sur la cheville de fixation (25), de préférence sur le corps de fixation (36), aussi bien dans la position d'insertion que dans la position de serrage.

5. Dispositif selon la revendication 4,
**caractérisé en ce que**
une partie du blocage anti-perte (20) est formée par une zone d'extrémité de la tige de fixation (10), laquelle présente un col d'enclenchement (22) et une tête d'enclenchement (24).

6. Dispositif selon l'une des revendications précédentes,
**caractérisé en ce que**
la cheville de fixation (25) est globalement plus longue que la tige de fixation (10).

7. Dispositif selon l'une des revendications précédentes,
**caractérisé en ce que**
la poursuite de la rotation au-delà de la position de serrage est empêchée mécaniquement par le dispositif de limitation (34).

8. Dispositif selon l'une des revendications précédentes,
**caractérisé en ce que**
le corps de fixation (36) comporte un blocage anti-rotation (39) présentant de préférence au moins une aile de serrage (40) qui s'écarte dans la position de serrage.

9. Dispositif selon l'une des revendications précédentes,
**caractérisé en ce que**
la cheville de fixation (25) comporte une tête de cheville (26) présentant une partie d'extrémité (28) en forme de plateau.

10. Dispositif selon l'une des revendications précédentes,
**caractérisé en ce que**
la tête de cheville (26) comprend au moins un, de préférence plusieurs, corps de support (30) pour supporter la zone d'extrémité (28) de la tête de cheville (26).

11. Dispositif selon l'une des revendications précédentes,
**caractérisé en ce que**
la tête de cheville (26) présente un évidement central (32) destiné à recevoir une tête de tige de fixation (12).

12. Dispositif selon la revendication 11,
**caractérisé en ce que**
la section transversale radiale maximale de la tête de tige de fixation (12) est inférieure à la section transversale radiale de l'évidement central (32) et est supérieure à la section transversale radiale de la cavité (38) du corps de fixation (36).

13. Procédé de fixation d'un objet (48), de préférence d'un matériau isolant, à un élément (50), de préférence à un mur, avec un dispositif selon l'une des revendications précédentes,
dans lequel
la cheville de fixation (25) avec la tige de fixation (10) disposée dans celle-ci est insérée dans l'évidement de l'élément (50), et
la tige de fixation (10) est déplacée avec moins d'un tour complet, le corps de fixation (36) s'évasant.
